(19) Europäisches Patentamt
European Patent Office
Office européen des brevets

(11) **EP 3 132 986 B1**

(12) **EUROPÄISCHE PATENTSCHRIFT**

(45) Veröffentlichungstag und Bekanntmachung des Hinweises auf die Patenterteilung:
**01.11.2017 Patentblatt 2017/44**

(51) Int Cl.:
***B60T 17/04*** *(2006.01)*

(21) Anmeldenummer: **16182919.7**

(22) Anmeldetag: **05.08.2016**

(54) **SCHLAUCHLEITUNGSSYSTEM FÜR EINE HYDRAULISCHE ZWEIRAD-BREMSANLAGE**

HOSE LINE SYSTEM FOR A HYDRAULIC BICYCLE BRAKE SYSTEM

SYSTEME DE CONDUITE EN TUYAUX FLEXIBLES POUR UNE INSTALLATION DE FREIN HYDRAULIQUE DE DEUX ROUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.08.2015 DE 202015104376 U**

(43) Veröffentlichungstag der Anmeldung:
**22.02.2017 Patentblatt 2017/08**

(73) Patentinhaber: **REHAU AG + Co**
**95111 Rehau (DE)**

(72) Erfinder:
• **Sturm, Matthias**
**95163 Weißenstadt (DE)**
• **Bayreuther, Thomas**
**95111 Rehau (DE)**
• **Yücel, Erdal**
**95028 Hof (DE)**
• **Görmer, Lutz**
**95111 Rehau (DE)**
• **Schörner, Georg**
**95111 Rehau (DE)**
• **Damberg, Jürgen**
**95111 Rehau (DE)**
• **Ruckdäschel, Gerhard**
**95163 Weißenstadt (DE)**

(56) Entgegenhaltungen:
**EP-A1- 0 148 099      EP-A1- 1 024 320**
**EP-A2- 0 982 523      AU-A4- 2012 101 666**
**JP-A- H1 019 172**

EP 3 132 986 B1

**Beschreibung**

Die Erfindung betrifft ein Schlauchleitungssystem für eine hydraulische Zweirad-Bremsanlage mit

- mindestens zwei flexiblen, vorzugsweise unterschiedlich langen, Bremsleitungen zur Aufnahme von Bremsflüssigkeit;

- wobei die Bremsleitungen jeweils zur Herstellung einer hydraulischen Wirkverbindung zwischen einem Bremshebel und einer Vorder- bzw. Hinterradbremse der Zweirad-Bremsanlage dienen;

- wobei die Bremsleitung jeweils einen einen inneren Hohlraum definierenden, vorzugsweise polymeren, Innenschlauch, eine den Innenschlauch geschlossen umgebende Armierungsschicht und eine die Armierungsschicht umgebende, vorzugsweise polymere, Schutzschicht aufweisen und

- wobei die geschlossene Armierungsschicht aus geflochtenen Fadenstränge aufgebaut ist.

Schlauchleitungssysteme mit den eingangs beschriebenen Merkmalen sind im Stand der Technik bekannt (Siehe z.B. EP 1 024 320). Bei dem genannten Zweirad kann es sich beispielsweise um ein normales Fahrrad, beispielsweise ein Rennrad, ein Pedelec, ein E-Bike oder auch einen Scooter handeln. Hydraulische Zweirad-Bremsanlagen sind sehr leistungsfähig und gewinnen aufgrund der vergleichsweise hohen Geschwindigkeiten der genannten Fahrzeuge sowie deren teilweise hohen Gewichtes daher immer mehr an Bedeutung.

Mittels der üblicherweise am Lenker des Zweirades befestigten Bremshebel werden über die zwei flexiblen Bremsleitungen, welche zweckmäßigerweise mit einer geeigneten Bremsflüssigkeit wie z.B. einem Mineralöl oder auch einer Bremsflüssigkeit der DOT-Klasse 3, 4 oder 5 gefüllt sind, die entsprechenden Hydraulikbremsen am Vorder- bzw. Hinterrad betätigt. Die Bremsleitung für die Vorderradbremse ist wegen des kürzeren Abstandes zwischen Lenker und Vorderrad regelmäßig kürzer als die Bremsleitung für die Hinterradbremse.

Bei den hochleistungsfähigen hydraulischen Bremsanlagen für Zweiräder ist es insbesondere wünschenswert, dass bei gleichzeitiger Betätigung beider Bremshebel das Einsetzen der Bremswirkung an Vorder- und Hinterrad ohne Zeitversatz zueinander erfolgt. Dieser Zeitversatz kann in der Praxis daraus resultieren, dass die Bremsleitung für das Hinterrad deutlich länger als diejenige für das Vorderrad ist. Aufgrund der - wenn auch geringen - Elastizität der Bremsleitungen kommt es wegen der größeren Länge der Bremsleitung für das Hinterrad regelmäßig dazu, dass die Hinterradbremse trotz gleichzeitiger Betätigung beider Bremshebel geringfügig später ihre Bremswirkung entfaltet als die Vorderradbremse. Wenngleich dieser Zeitverzug äußert kurz ist, so wird er dennoch von den Fahrern der Zweiräder, welche zum Teil sehr hohe Ansprüche an die Synchronität der beiden Bremsen stellen, zuweilen als störend empfunden.

Vor diesem Hintergrund liegt der Erfindung die Aufgabe zugrunde, ein Schlauchleitungssystem mit den eingangs beschriebenen Merkmalen anzugeben, welches eine hohe Synchronität hinsichtlich der Bremswirkung von Vorder- und Hinterradbremse bei gleichzeitiger Bestätigung der entsprechenden Bremshebel gewährleistet.

Erfindungsgemäß wird diese Aufgabe dadurch gelöst, dass in einem durch die Bremsleitungsachse verlaufenden Bremsleitungslängsschnitt gesehen die geflochtenen Fadenstränge einen derart abgeflachten Querschnitt aufweisen, dass aufgrund der hierdurch bedingten großen direkten Kontaktfläche zwischen Armierungsschicht und der die Armierungsschicht umgebenden Schutzschicht die Bremsleitungen bei einer Betätigung der Bremsen durch die Bremshebel eine derart geringe elastische Verformung zeigen, dass die Volumenausdehnung des Hohlraumes der Bremsleitungen bei einem Innendruck von 138 bar und 20 °C weniger als 8 %, vorzugsweise weniger als 6 %, insbesondere weniger als 5 %, beträgt. Die Volumenausdehnung des Hohlraumes resultiert hierbei aus einer elastischen Ausdehnung des Innenschlauches in radialer und axialer Richtung aufgrund des Innendruckes. Folglich gilt für die vorstehend ge-nannte prozentuale Volumenausdehnung $\varepsilon$ die folgende Definition:

$$\varepsilon = \frac{V_D}{V_0} = \frac{L_D * A_D}{L_0 * A_0} = \frac{L_D * \frac{\pi}{4} * d_D^2}{L_0 * \frac{\pi}{4} * d_0^2} = \frac{L_D * d_D^2}{L_0 * d_0^2}$$

Die prozentuale Volumenausdehnung $\varepsilon$ errechnet sich somit aus dem Volumen $V_D$ des Hohlraumes unter Druckbelastung (gekennzeichnet durch den tiefgestellten Index D) dividiert durch das entsprechende Volumen $V_0$ im

unbelasteten Zustand (gekennzeichnet durch den tiefgestellten Index 0), wobei das Hohlraumvolumen V selbst sich jeweils aus der Hohlraumlänge L multipliziert mit der Querschnittsfläche A des zylindrischen Hohlraumes berechnet, die wiederum durch den Hohlraumdurchmesser d definiert wird. Die prozentuale Volumenausdehnung $\varepsilon$ ist grundsätzlich unabhängig von der Länge $L_0$, da die Längenausdehnung proportional zur Schlauchlänge ist und somit der Quotient $L_D/L_0$ unabhängig von $L_0$ selbst ist. Um Messfehler möglichst klein zu halten, erfolgt die experimentelle Bestimmung von $\varepsilon$ jedoch zweckmäßigerweise mit einer großen Schlauchlänge $L_0$, z.B. $L_0$ = 10 m. In der Praxis ist die Volumenzunahme durch die axiale Ausdehnung der Bremsleitung im Vergleich zur radialen Ausdehnung in der Regel sehr klein. Die prozentuale Volumenausdehnung $\varepsilon$ ist auch grundsätzlich unabhängig vom Medium, mit dem der Hohlraum bei deren experimentellen Bestimmung befüllt ist. Zweckmäßigerweise wird hierfür jedoch eine handelsübliche Bremsflüssigkeit, z.B. der DOT-Klasse 4, verwendet.

Während im Stand der Technik bislang versucht wurde, beispielsweise über eine hochfeste, z.B. nur aus Aramidfäden bestehende Armierung, ein möglichst festes Korsett um den Innenschlauch herum zu bilden und hierdurch die Volumenausdehnung des Innenschlauchhohlraumes bei einer Bremsbetätigung zu minimieren, verfolgt die erfindungsgemäße Lehre nun ein gänzlich anderes Konzept. Erfindungsgemäß wurde herausgefunden, dass für eine möglichst geringe Volumenänderung die Gestalt der Kontaktfläche zwischen der Armierungsschicht und der die Armierungsschicht umgebenden Schutzschicht wesentlich ist. Dies ist insofern überraschend, als dass die Schutzschicht eigentlich primär dafür vorgesehen ist, die Armierungsschicht gegen äußere Einflüsse zu schützen und nicht dazu, die mechanische Belastbarkeit der Bremsleitung zu erhöhen. Im Rahmen der Erfindung hat sich nun jedoch herausgestellt, dass für das im vorliegenden Fall ungewünschte "Atmen" der Bremsleitung insbesondere auch die zwischen der äußeren Oberfläche der geflochtenen Armierungsschicht und der Innenoberfläche der Schutzschicht vorhandenen Hohlräume (nachfolgend Lunker genannt) verantwortlich sind, die sich insbesondere im Bereich der Kreuzungspunkte der Fadenstränge der Flechtung befinden. Es hat sich herausgestellt, dass für eine möglichst schnelle Übertragung des Drucks in der Bremsleitung vom Bremshebel zur Hydraulikbremse die Größe dieser Lunker entscheidend ist. Erfindungsgemäß wird folglich darauf geachtet, dass die Fadenstränge im geflochtenen Zustand einen sehr abgeflachten Querschnitt aufweisen, wodurch sich auch bei mikroskopisch vergößerter Betrachtung eine annähernd ideal zylinderförmige Außenoberfläche der Armierungsschicht ergibt. Dies hat zur Folge, dass zwischen der äußeren Oberfläche der Armierungsschicht und der Innenoberfläche der Schutzschicht nur sehr kleine Lunker vorhanden sind und damit insgesamt das Kompressionsvolumen zwischen Armierungsschicht und Schutzschicht klein ist. Bei einer Betätigung der Bremsen durch die Bremshebel wird entsprechend nur dieses vergleichsweise kleine Kompressionsvolumen zusammen gedrückt, so dass der Übergangsbereich von Armierungsschicht zur Schutzschicht insgesamt nur eine geringe Kompressibilität aufweist. Dies führt insgesamt wiederum dazu, dass die Bremsleitungen trotz unterschiedlicher Länge aufgrund ihrer sehr geringen Kompressibilität eine hohe Synchronität der Bremsen bei gleichzeitiger Betätigung beider Bremshebel gewährleisten.

Zweckmäßigerweise beträgt aufgrund der großen direkten Kontaktfläche zwischen Armierungsschicht und der die Armierungsschicht umgebenden Schutzschicht die Volumenausdehnung des Hohlraumes der Bremsleitungen bei einem Innendruck von 69 bar und 20 °C weniger als 5 %, vorzugsweise weniger als 4 %, besonders bevorzugt weniger als 3 %. Ferner beträgt in vorteilhafter Weise die Volumenausdehnung des Hohlraumes der Bremsleitungen bei einem Innendruck von 276 bar und 20 °C weniger als 20 %, vorzugsweise weniger als 15 %, besonders bevorzugt weniger als 10 %. Es zeigt sich, dass die durch den abgeflachten Querschnitt der Fadenstränge bedingte, vorstehend beschriebene geringe Kompressibilität der Bremsleitung im Übergangsbereich von Armierungsschicht und Schutzschicht insbesondere bei hohen Innendrücken ein sehr deutlicher Vorteil gegenüber dem Stand der Technik vorliegt. Der Berstdruck einer erfindungsgemäßen Bremsleitung beträgt zweckmäßigerweise mindestens 1000 bar.

Ein Fadenstrang besteht aus mindestens einem Einzelfaden. So kann z.B. ein Fadenstrang aus einem, alternativ aber auch aus zwei Einzelfäden bestehen. Um die erfindungsgemäß möglichst abgeflachte Kontur der Fadenstränge zu erreichen, können verschiedene Maßnahmen zum Einsatz kommen. So kann es beispielsweise von Vorteil sein, wenn die Fadenstränge nur eine geringe, insbesondere gar keine Verdrillung aufweisen. Die Verdrillung z ist vorliegend definiert durch die Anzahl der Umdrehungen eines einzelnen Fadenstrangs um die eigene Achse pro Meter Fadenstranglänge. Im Stand der Technik wird regelmäßig mit einer vergleichsweise hohen Verdrillung der Fadenstränge gearbeitet, um eine möglichst starre Armierung zu gewährleisten. Im Rahmen der Erfindung hat sich hingegen herausgestellt, dass bei einer geringen Verdrillung der Fadenstränge diese während des Flechtvorganges eine flexible und daher anpassungsfähige Oberfläche aufweisen, die eine ausgeprägte Abflachung des ursprünglich zumindest im wesentlichen kreisförmigen Querschnitts der Einzelfäden durch die Flechtung ermöglichen. Zweckmäßigerweise beträgt die Verdrillung z weniger als 100/m, vorzugsweise weniger als 50/m, insbesondere weniger als 20/m, besonders bevorzugt weniger als 10/m, ganz besonders bevorzugt weniger als 5/m beträgt. Insbesondere weisen die Fadenstränge eine Verdrillung z < 1/m, z.B. z = 0/m (also überhaupt keine Verdrillung) auf.

Aus der geringen bzw. fehlenden Verdrillung der Fadenstränge resultiert eine vergleichsweise flexible Positionierung der Fadenstränge innerhalb der Armierungsschicht, sodass eine sehr gleichmäßige Anpassung der Armierungsschicht an die äußere Oberfläche des Innenschlauchs möglich ist. Hieraus ergibt sich letztendlich eine homogene, annähernd ideal zylindrische Außenoberfläche der Armierungsschicht mit nur sehr kleinen Lunkern. Aus der geringen Verdrillung der Fadenstränge resultiert ferner in vorteilhafter Weise eine höhere Belastbarkeit der Armierungsschicht.

Im Rahmen der Erfindung liegt es insbesondere, dass der im axialen Blemsleitungslängsschnitt gesehen abgeflachte Querschnitt der geflochtenen Fadenstränge mindestens zweimal, vorzugsweise mindestens dreimal so breit wie hoch ist. Der abgeflachte Querschnitt kann im Wesentlichen ellipsenförmig ausgebildet sein. Im Rahmen der Erfindung liegt es jedoch insbesondere, dass dieser abgeflachte Querschnitt die Form eines Parallelogramms besitzt. Hierdurch ist eine sehr dichte, homogene Flechtung der einzelnen Fadenstränge möglich, die ein geringes Lunkervolumen zwischen der Armierungsschicht und der Schutzschicht gewährleistet.

Zweckmäßigerweise weist die Armierungsschicht mindestens 16 miteinander verflochtene Fadenstränge auf, beispielsweise 16, 20 oder 24 Fadenstränge. Aus einer möglichst großen Anzahl an Fadensträngen ergibt sich, dass an der äußeren Oberfläche der Armierungsschicht viele kleine von den miteinander verflochtenen Fadensträngen gebildete Kreuzungspunkte vorliegen anstelle weniger großer bei einer geringen Fadenanzahl. Im Rahmen der Erfindung hat sich herausgestellt, dass eine große Fadenanzahl die gewünschte Abflachung der Fadenquerschnitte in der Flechtung begünstigt, so dass insgesamt die bei hoher Fadenanzahl durch die vielen kleinen Kreuzungspunkte hervorgerufenen vielen kleinen Lunker ein geringeres Gesamtvolumen aufweisen als die wenigen großen Lunker, die durch die großen Kreuzungspunkte bei geringer Fadenanzahl hervorgerufen werden. Folglich hat eine möglichst große Fadenanzahl einen positiven Effekt hinsichtlich der Größe der Kontaktfläche zwischen Armierungsschicht und Schutzschicht.

Im Rahmen der Erfindung kann es von Vorteil sein, wenn der Innenschlauch an die Kontur der geflochtenen Armierungsschicht angepasste Abzeichnungen aufweist, die die Kontaktfläche zwischen Innenschlauch und Armierungsschicht vergrößern. Hierdurch wird ebenfalls eine gleichmäßige Außenkontur der Armierungsschicht begünstigt. Abzeichnungen können beispielsweise durch eine Vorwärmung des Innenschlauchs vor der Flechtung realisiert werden. Sofern hochtemperaturbeständige Innenschläuche zum Einsatz kommen, was aufgrund der tendenziell immer weiter zunehmenden technischen Anforderungen an die Bremsleitungen immer häufiger der Fall ist, bleibt der Innenschlauch abzeichnungsfrei.

Auch die Materialwahl bzgl. der Fadenstränge der Armierungsschicht hat einen Einfluss auf deren Abflachung im geflochtenen Zustand. Zweckmäßigerweise sind die Fadenstränge frei von Aramid. Von Vorteil ist es, wenn die Fadenstränge aus einem vergleichsweise leicht verformbaren Polymer, insbesondere Polyester und/oder Polyamid bestehen. Im Rahmen der Erfindung liegt es aber auch, dass der mindestens eine Faden eines Fadenstranges jeweils aus mehreren Filamenten aus organischem Material, insbesondere Polyester und / oder Polyamid und / oder anorganischem Material, insbesondere Aramid, besteht. So können beispielsweise im Rahmen der Erfindung Hybridfäden in Form einer Kombination aus Polyesterfilamenten und/oder Polyamidfilamenten und / oder Aramidfilamenten zum Einsatz kommen. Ebenso liegt es im Rahmen der Erfindung, dass die Armierungschicht aus einer Kombination von Polyesterfäden und/oder Polyamidfäden und/oder Aramidfäden besteht. Im Rahmen der Erfindung liegt es auch, dass ein Faden lediglich aus einem einzigen Filament besteht. Üblicherweise besteht jedoch ein Faden aus 100 - 300 Filamenten. Zweckmäßigerweise weisen in einem durch die Bremsleitungsachse x verlaufenden Längsschnitt gesehen die einzelnen Fadenstränge im geflochtenen Zustand eine Querschnittsfläche von 0,3 bis 0,7 mm$^2$ , vorzugsweise 0,4 bis 0,6 mm$^2$ auf. Ferner weisen die Filamente vorzugsweise eine geringe Reißdehnung von weniger als 12 % insbesondere weniger als 10 % auf.

Der Innendurchmesser des Innenschlauches beträgt zweckmäßigerweise 1,5 bis 2,6 mm, vorzugsweise 1,8 bis 2,6 mm. Der Innendurchmesser kann für Hochleistungsanwendungen, z.B. bei Scootern, auch größer sein, z.B. 2,5 bis 3,8 mm. Als Material für den polymeren Innenschlauch kommen vorzugsweise PA, PPA, PBT oder Fluorpolymere, insbesondere FEP oder PVDF in Betracht. Zweckmäßigerweise besteht der Innenschlauch aus einem der vorgenannten polymeren Materialien. Die Wandstärke des Innenschlauches beträgt zweckmäßigerweise 0,4 bis 0,8 mm, insbesondere 0,4 bis 0,7 mm. Vorzugsweise befindet sich zwischen Innenschlauch und Armierungsschicht kein Klebstoff. Hierdurch wird ein von Klebstoffeinwirkung unbeeinflusster Flechtvorgang zur Herstellung der Armierungsschicht gewährleistet, was die erfindungsgemäße Abflachung des Querschnittes der Fadenstränge in der Flechtung begünstigt.

Die Armierungsschicht selbst weist zweckmäßigerweise eine Schichtdicke von 0,3 bis 0,5 mm, vorzugsweise 0,3 bis 0,4 mm auf. Sie ist umgeben von der polymeren Schutzschicht, welche vorzugsweise die äußerste Schicht der Bremsleitungen bildet. Die polymere Schutzschicht weist zweckmäßigerweise einen Außendurchmesser von 3 bis 6 mm, z. B. 3,5 bis 5,5 mm, vorzugsweise 4,5 bis 5,5 mm, auf. Die polymere Schutzschicht kann eine Schichtdicke von 0,3 bis 0,7 mm, insbesondere 0,4 bis 0,6 mm, aufweisen. Zweckmäßigerweise befindet sich zwischen Armierungsschicht und Schutzschicht kein Klebstoff.

Wie eingangs erläutert, resultiert aus der unterschiedlichen Länge von Vorderrad- und Hinterradbremsleitung im Stand der Technik das unerwünschte asynchrone Bremsverhalten. So kann in der Praxis beispielsweise die Bremsleitung für die Hinterradbremse mindestens 0,5 m, z.B. mindestens 0,8 m länger sein als die Bremsleitung für die Vorderradbremse. Mittels der vorstehend erläuterten Maßnahmen wird jedoch trotz dieser unterschiedlichen Leitungslänge ein praktisch synchrones Bremsverhalten gewährleistet. Übliche Längen für Bremsleitungen für die Vorderrad- / Hinterradbremse sind beispielsweise 750 mm vorne / 1.500 mm hinten bzw. 820 mm vorne / 1.700 mm hinten.

Gegenstand der erfindungsgemäßen Lehre ist auch eine hydraulische Zweirad-Bremsanlage mit

- zwei hydraulisch betätigbaren Bremsen für Vorder- bzw. Hinterrad;

- zwei Bremshebeln zur Betätigung der Bremsen und

- einem erfindungsgemäßen Schlauchleitungssystem wie vorstehend beschrieben,

- wobei die beiden Bremsleitungen des Schlauchleitungssystems jeweils eine hydraulische Wirkverbindung zwischen einem Bremshebel und einer Bremse herstellen.

Zweckmäßigerweise sind die beiden Bremsleitungen mit einer Bremsflüssigkeit gefüllt. Hierbei kann es sich um ein Öl, insbesondere ein Mineralöl, handeln. Alternativ kann auch eine Bremsflüssigkeit der DOT-Klasse 3, 4 oder 5 zum Einsatz kommen. DOT-Klassen sind Bestandteil einer vom amerikanischen "Department Of Transportation" eingeführten, weltweit anerkannten Klassifikation von Bremsflüssigkeiten, welche diese nach ihren Siedpunkten einteilt.
Im Folgenden wird die Erfindung anhand von lediglich ein Ausführungsbeispiel darstellenden Zeichnungen bzw. Fotografien ausführlich erläutert.
Es zeigen:

Fig. 1     ein Zweirad mit einer hydraulischen Fahrrad-Bremsanlage enthaltend ein erfindungsgemäßes Schlauchleitungssystem;

Fig. 2     eine der beiden in Fig. 1 dargestellten flexiblen Bremsleitungen in einer dreidimensionalen ausschnittsweisen Darstellung, in der der Innenschlauch und die geschlossene Armierungsschicht der Bremsleitung freigelegt sind

Fig. 2a    einen Querschnitt durch einen noch nicht verflochtenen Armierungsfaden, der zur Herstellung der in der Fig. 2 dargestellten Armierungsschicht verwendet wird;

Fig. 3     einen Querschnitt durch die in Fig. 2 dargestellte Bremsleitung;

Fig. 4     eine fotografische, vergrößerte Draufsicht auf eine erfindungsgemäße geschlossene Armierungsschicht;

Fig. 5     einen fotografischen, mikroskopisch vergrößerten Längsschnitt durch die Längsachse einer erfindungsgmäßen Bremsleitung ohne Bemaßung (oben) und mit Bemaßung (unten);

Fig. 6     eine zur Fig. 5 analoge Darstellung einer Bremsleitung gemäß dem Stand der Technik ohne Bemaßung (oben) und mit Bemaßung (unten);

Fig. 7     ein Diagramm, welches die Volumenausdehnung $\varepsilon$ des inneren Hohlraums einer erfindungsgemäßen Bremsleitung in Abhängigkeit des Innendrucks im Vergleich zu einer Bremsleitung gemäß dem Stand der Technik zeigt

Fig. 8     eine Detaildarstellung eines Bremshebels gemäß Fig. 1 sowie der entsprechenden Bremshebelwege bei Betätigung der Bremshebel

Fig.9      eine Darstellung analog zu Fig. 8 bei Verwendung von Bremsleitungen gemäß dem Stand der Technik

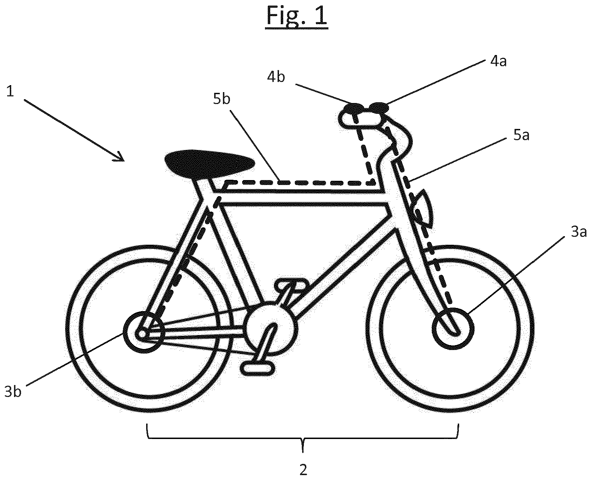

Die Fig. 1 zeigt ein Zweirad 1 mit einer hydraulischen Zweirad-Bremsanlage 2. Bei dem Zweirad 1 kann es sich um ein gewöhnliches Fahrrad, beispielsweise ein Rennrad oder aber auch um ein Pedelec, ein E-Bike oder einen Scooter handeln. Die Zweirad-Bremsanlage 2 weist zwei hydraulisch betätigbare Bremsen 3a, 3b für Vorder- bzw. Hinterrad, zwei Bremshebel 4a, 4b zur Betätigung der Bremsen 3a, 3b und ein erfindungsgemäßes Schlauchleitungssystem mit zwei unterschiedlich langen Bremsleitungen 5a, 5b für die Vorderradbremse 3a, bzw. die Hinterradbremse 3b auf, wobei die kürzere Bremsleitung 5a an die Vorderradbremse 3a und die längere Bremsleitung 5b an die Hinterradbremse 5b angeschlossen ist. Die Bremsleitung 5a stellt eine hydraulische Wirkverbindung zwischen dem Bremshebel 4a und der Bremse 3a und die Bremsleitung 5b eine hydraulische Wirkverbindung zwischen dem Bremshebel 4b und der Bremse 3b her. Beide Bremsleitungen 5a, 5b sind mit einer Bremsflüssigkeit der DOT-Klasse 5 gefüllt. Die Bremsleitung 5b für die Hinterradbremse 3b ist mindestens 0,5 m länger ist als die Bremsleitung 5a für die Vorderradbremse 3a, beispielsweise beträgt die Länge der Bremsleitung 5a für die Vorderradbremse 3a 820 mm und die Länge der Bremsleitung 5b für die Hinterradbremse 3b 1.700 mm.

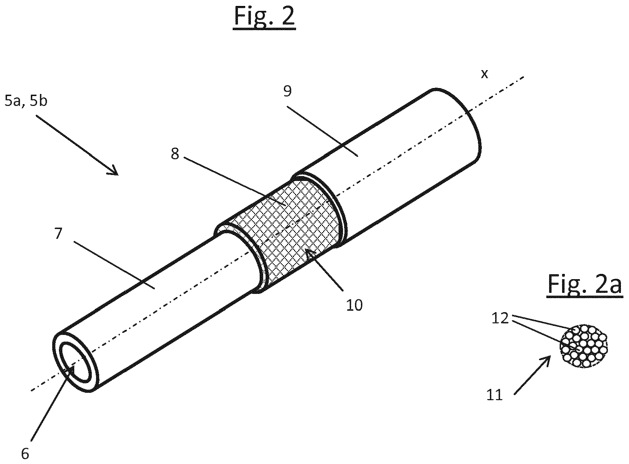

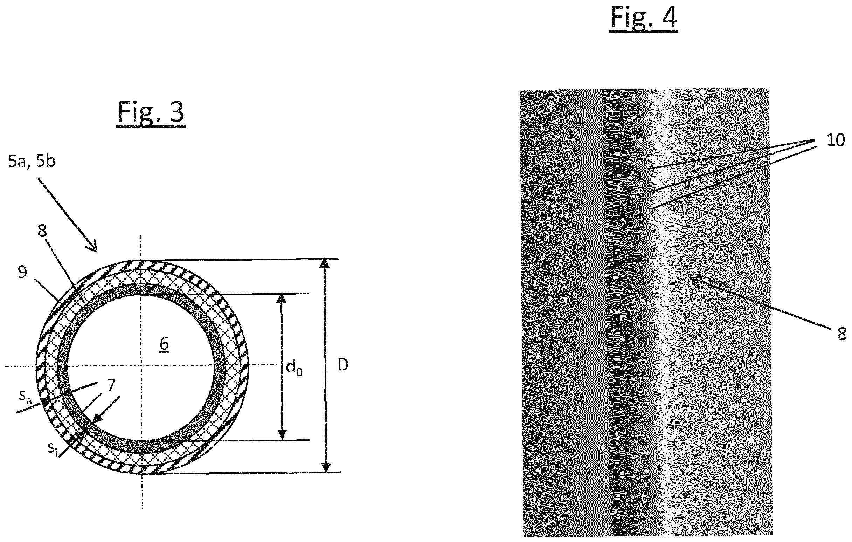

Anhand der Fig. 2 ist erkennbar, dass die beiden Bremsleitungen 5a, 5b jeweils einen einen inneren Hohlraum 6 definierenden polymeren Innenschlauch 7, eine den Innenschlauch 7 geschlossen umgebende Armierungsschicht 8 und eine die Armierungsschicht 8 umgebende polymere Schutzschicht 9 aufweisen, wobei die geschlossene Armierungsschicht 8 aus geflochtenen Fadensträngen 10 aufgebaut ist. Eine solche geschlossene Flechtung aus Fadensträngen 10 ist beispielsweise in der fotografischen Darstellung gemäß der Fig. 4 abgebildet. Ein Fadenstrang 10 kann aus einem einzelnen, in Fig. 2a im Querschnitt dargestellten Faden 11 bestehen, oder aber auch aus mehreren, beispielsweise zwei Fäden 11. Zum Aufbau der Bremsleitungen 3a, 3b wird ferner auf die entsprechende Querschnittsdarstellung in Fig. 3 verwiesen. Fig 2 zeigt auch die Bremsleitungsachse x.

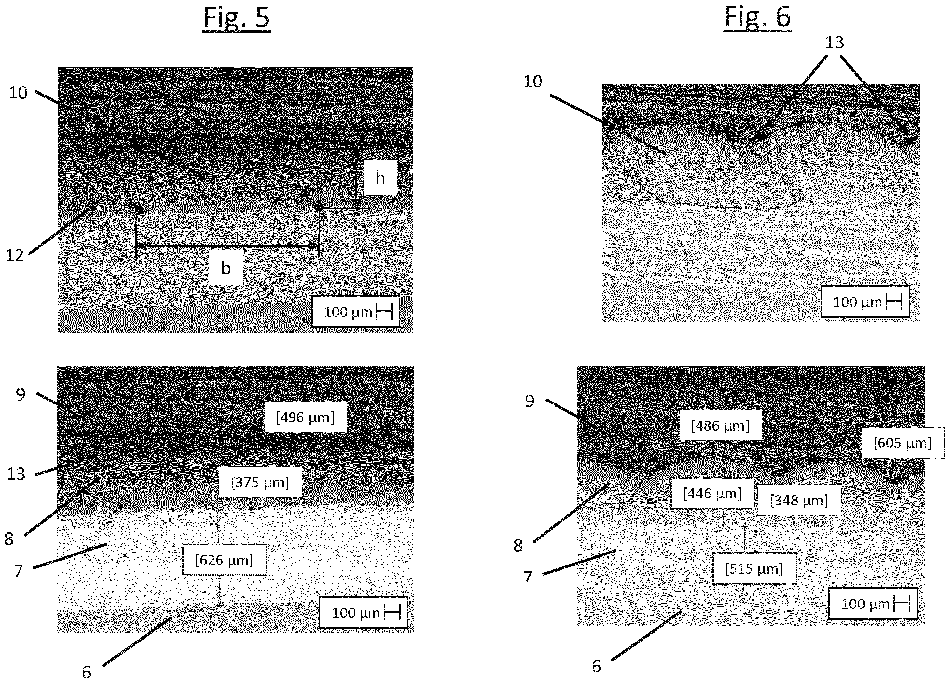

Die Fig. 2a zeigt im Querschnitt schematisch einen einzelnen Faden 11 vor der Verflechtung zur Armierungsschicht 8. Der Faden besteht aus einer Vielzahl (z. B. 100 - 300) einzelner Filamente 12. Durch eine optimierte Abstimmung verschiedener Parameter bei der Herstellung der Armierungsschicht 8, beispielsweise einer geeignet geringen Verdrillung z wie im allgemeinen Beschreibungsteil angegeben (z.B. vollkommen unverdrillter Faden mit z = 0), einer geeigneten Flechtgeschwindigkeit von vorzugweise 20 m / h bis 60 m / h, einer ausreichend großen Fadenzahl der Flechtung (vorzugsweise mindestens 16) und einer geeigneten Fadenspannung während des Flechtvorganges (vorzugsweise mindestens 400 g) sowie dem Einsatz geeigneter Materialien für die Fadenstränge 10 (z.B. einer Reißdehnung der entsprechenden Filamente 12 von weniger als 12 %, insbesondere weniger als 10 %) wird insgesamt erreicht, dass gemäß Fig. 5 in einem durch die Längsachse x verlaufenden Längsschnitt durch die Bremsleitung 5a, 5b gesehen die geflochtenen Fadenstränge 10 einen gegenüber einem Kreisquerschnitt derart abgeflachten Querschnitt aufweisen, dass die äußere Oberfläche der Armierungsschicht 8 selbst in einer mit dem Mikroskop erheblich vergrößerten fotografischen Darstellung einer idealen Zylinderform sehr nahe kommt. Dies ermöglicht eine sehr große direkte Kontaktfläche zwischen der Armierungsschicht 8 und der die Armierungsschicht 8 umgebenden Schutzschicht 9 mit nur sehr kleinen Lunkern 13. Im Längsschnitt durch die Leitungsachse x gemäß Fig. 5 ist auch erkennbar, dass die Breite b des abgeflachten Querschnitts der geflochtenen Fadenstränge 10 mehr als dreimal so groß ist wie dessen Höhe h. Ferner ist zu erkennen, dass der Querschnitt zumindest im Wesentlichen die Form eines Parallelogramms aufweist (durch dünne Umrandung im oberen Bild angedeutet, wobei die Eckpunkte der Umrandung durch schwarze Punkte hervorgehoben wurden). Dies ermöglicht ferner eine gleichmäßige Spannung der Fadenstränge 10 in der Armierungsschicht 8. Die Armierungsschicht 8 besteht im Ausführungsbeispiel aus 16 miteinander verflochtenen Fadensträngen 10.

Die in Fig. 2a exemplarisch dargestellten Filamente 12 bestehen im Ausführungsbeispiel aus Polyester oder Polyamid. Im Rahmen der Erfindung liegt es, dass beispielsweise Fäden 11 aus Polyester und/oder Polyamid mit Fäden 11 aus Aramidfilamenten kombiniert werden, insbesondere also die einzelnen Fadenstränge 10 entsprechend aus unterschiedlichen Materialien bestehen können. Auch eine Kombination von Fäden 11 aus Polyester mit Fäden 11 aus Polyamid liegt im Rahmen der Erfindung. In dem gemäß Fig. 5 durch die Bremsleitungsachse x verlaufenden Längsschnitt gesehen weisen die einzelnen Fadenstränge 10 im geflochtenen Zustand eine Querschnittsfläche von ca. 0,4 bis 0,6 $mm^2$ auf. Man erkennt mithin, dass die Querschnitte der Fadenstränge 10 im geflochtenen Zustand erheblich von ihrer Ursprungsform, welche im Wesentlichen Kreisformen aufweisen, abweichen. Dieser abgeflachte Querschnitt der Fadenstränge 11, welche zu einer äußerst homogenen äußeren Oberfläche der Flechtung der Armierungsschicht 8 führt, ist erfindungswesentlich. Ferner ist auch in Fig. 5 erkennbar, dass ein Fadenstrang 10 aus einer Vielzahl von einzelnen Filamenten 12 besteht. Im Vergleich dazu ist in Fig. 6 eine der Fig. 5 entsprechende Darstellung einer Bremsleitung gemäß dem Stand der Technik dargestellt. Man erkennt, dass hier die äußere Oberfläche der Flechtung eine ausgeprägte Wellenform mit großen Lunkern 13 zwischen Armierungsschicht 8 und Schutzschicht 9 aufweist, welche bei einer inneren Druckbelastung zusammengedrückt werden und zum hier ungewünschten "Atmen", also einer vergleichsweise großen Expansion des Hohlraumes 6 führen.

Der Innenschlauch 7 besteht im Ausführungsbeispiel aus Polyamid. Denkbar sind jedoch auch hochtemperaturbeständige Materialien, die z.B. FEP. Der Innendurchmesser $d_0$ des Innenschlauches im unbelasteten Zustand beträgt im Ausführungsbeispiel 1,5 bis 2,6 mm (s. Fig. 3). Die Wandstärke $s_i$ des Innenschlauchs 7 beträgt 0,4 bis 0,7 mm. Die Armierungsschicht 8 weist eine Schichtdicke $s_a$ von 0,3 bis 0,4 mm auf. Ferner besitzt die Schutzschicht 9 einen Außendurchmesser D von 3,5 bis 5,5 mm. Im Ausführungsbeispiel bildet die polymere Schutzschicht 9 die äußerste Schicht der Bremsleitung 5a, 5b.

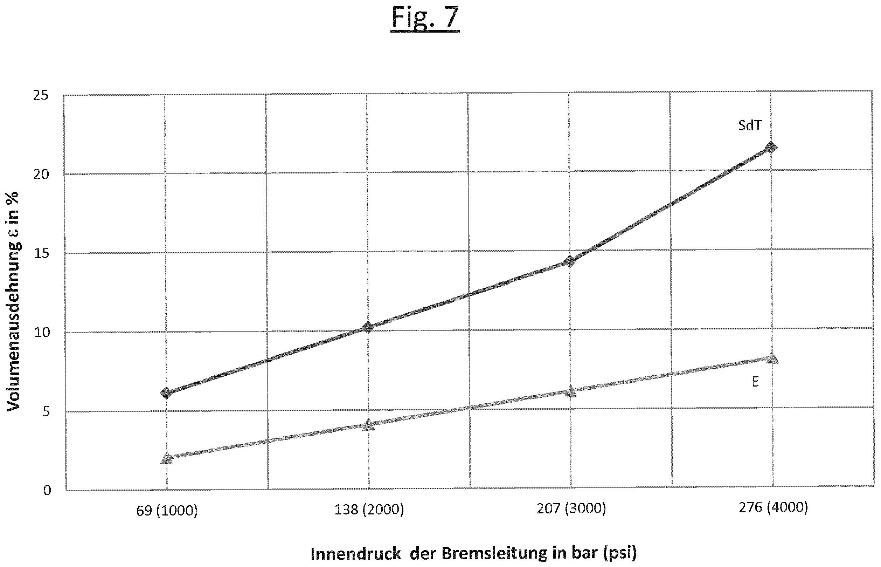

Der physikalische Effekt der erfindungsgemäßen Lehre ist nun im Diagramm gemäß Fig. 7 ausführlich erläutert. Das Diagramm zeigt die eingangs definierte, experimentell bestimmte Volumenausdehnung $\varepsilon$ (Ordinate) einer erfindungsgemäßen Bremsleitung 5a, 5b in Abhängigkeit vom Innendruck p der Bremsleitung in bar (Abzisse, die Werte in Klammern gelten für die Einheit psi, 1 psi = 6,8948 $10^{-2}$ bar) bei 20 °C im Vergleich zum entsprechenden Verhalten einer Bremsleitung gemäß dem Stand der Technik. Um Messfehler klein zu halten, erfolgte die experimentelle Bestimmung jeweils mit einer großen Schlauchlänge $L_0$ = 10 m. Als Befüllung für die Bremsleitungen wurde eine handelsübliche Bremsflüssigkeit der DOT-Klasse 4 verwendet. Es ist anhand des Diagramms beispielsweise erkennbar, dass bei einem Innendruck von 69 bar eine Bremsleitung gemäß dem Stand der Technik (mit "SdT" gekennzeichnet) eine Volumenausdehnung $\varepsilon$ von ca. 6 % aufweist. Aufgrund der erfindungsgemäßen Gestaltung der Bremsleitungen 5a, 5b mit stark abgeflachtem Querschnitt der geflochtenen Fadenstränge 10 sind bei den erfindungsgemäßen Bremsleitungen hingegen deutlich niedrigere Volumenänderungen zu beobachten, nämlich ca. 2 % (mit "E" gekennzeichnet). Das Ausmaß dieser unterschiedlichen Volumenausdehnung ε nimmt mit zunehmendem Innendruck der Bremsleitung immer weiter zu, wie anhand der Fig. 7 deutlich erkennbar ist. Bei einem Innendruck von 138 bar zeigt die Bremsleitung gemäß dem Stand der Technik eine Volumenausdehnung ε von mehr als 10 %, während diese bei einer erfindungsgemäßen Bremsleitung 5a, 5b ca. 4 % beträgt. Bei einem Innendruck von 276 bar zeigt die Bremsleitung gemäß dem Stand der Technik eine Volumenausdehnung ε von mehr als 20 %, während diese bei einer erfindungsgemäßen Bremsleitung nur ca. 8 % beträgt. Die erfindungsgemäß sehr geringe Volumenausdehnung ε ist verantwortlich für ein praktisch identisches Ansprechen von Vorderrad- und Hinterradbremse 3a, 3b bei gleichzeitiger Betätigung der entsprechenden Bremshebel 4a, 4b. Die Versuche wurden mit einer handelsüblichen Bremsflüssigkeit, z.B. der Klasse DOT 4, durchgeführt.

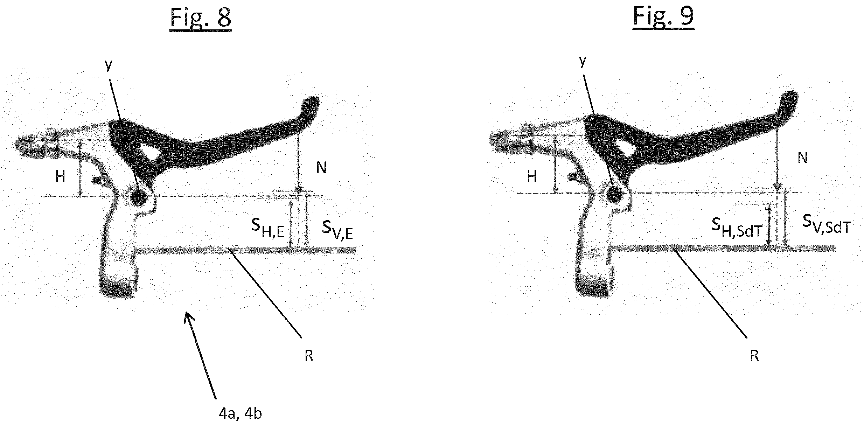

Die Fig. 8 zeigt die Bremshebelwege bei Betätigung der in Fig. 1 dargestellten Bremshebel 4a, 4b, also entsprechend unter Verwendung erfindungsgemäßer Bremsleitungen 5a, 5b im Vergleich zum Stand der Technik gemäß Fig. 9. Es ist erkennbar, dass bei der erfindungsgemäßen Lehre gemäß Fig. 8 zur Aufbringung einer definierten Bremshebelkraft N (hier N = 30 N) sowohl hinsichtlich der Vorderradbremse 3a als auch hinsichtlich der Hinterradbremse 3b ein geringerer Bremshebelweg erforderlich ist als beim Stand der Technik. Bei der erfindungsgemäßen Lehre betragen die in der Figur 8 dargestellten Abstände zu einer Referenzlinie R für die Vorderradbremse $S_{V,E}$ = 30,2 mm und für die Hinterradbremse $S_{H,E}$ = 29,7 mm. Folglich beträgt die Differenz der Bremshebelwege nur $S_{V,E} - S_{H,E}$ = 0,5 mm, was entscheidend hinsichtlich der Synchronität von Vorderradbremse 3a und Hinterradbremse 3b ist. Beim Stand der Technik gemäß Figur 9 sind hingegen zunächst einmal bereits die Bremshebelwege selbst länger. Die entsprechenden Abstände zur Referenzlinie R betragen hier für die Vorderradbremse nur $S_{V,SdT}$ = 28,9 mm und für die Hinterradbremse nur $S_{H,SdT}$ = 27,6 mm. Insbesondere ist aber beim Stand der Technik die Differenz zwischen diesen beiden Größen mehr als doppelt so groß, nämlich $S_{V,SdT} - S_{H,SdT}$ = 1,3 mm. Die in den Fig. 8 und 9 dargestellte Größe H ist der Abstand zwischen Kraftangriffspunkt am Bremshebel und der Drehachse y des Bremshebels 4a, 4b und wurde konstant h = 30 mm gewählt.

**Patentansprüche**

1.  Schlauchleitungssystem für eine hydraulische Zweirad-Bremsanlage (2) mit

    - mindestens zwei flexiblen, vorzugsweise unterschiedlich langen, Bremsleitungen (5a, 5b) zur Aufnahme von Bremsflüssigkeit;
    - wobei die Bremsleitungen (5a, 5b) jeweils zur Herstellung einer hydraulischen Wirkverbindung zwischen einem Bremshebel (4a, 4b) und einer Vorder- bzw. Hinterradbremse (3a, 3b) der Zweirad-Bremsanlage (2) dienen;
    - wobei die Bremsleitungen (5a, 5b) jeweils einen einen inneren Hohlraum (6) definierenden, vorzugsweise polymeren, Innenschlauch (7), eine den Innenschlauch (7) geschlossen umgebende Armierungsschicht (8) und eine die Armierungsschicht (8) umgebende, vorzugsweise polymere, Schutzschicht (9) aufweisen und
    - wobei die geschlossene Armierungsschicht (8) aus geflochtenen Fadensträngen (10) aufgebaut ist;

    **dadurch gekennzeichnet, dass** in einem durch die Bremsleitungsachse (x) verlaufenden Bremsleitungslängsschnitt gesehen die geflochtenen Fadenstränge (10) einen derart abgeflachten Querschnitt aufweisen, dass aufgrund der hierdurch bedingten großen direkten Kontaktfläche zwischen Armierungsschicht (8) und der die Armierungsschicht (8) umgebenden Schutzschicht (9) die Bremsleitungen (5a, 5b) bei einer Betätigung der Bremsen (3a, 3b) durch die Bremshebel (4a, 4b) eine derart geringe elastische Verformung zeigen, dass die Volumenausdehnung ε des Hohlraumes (6) der Bremsleitungen (5a, 5b) bei einem Innendruck von 138 bar und 20 °C weniger als 8 %, vorzugsweise weniger als 6 %, beträgt.

2.  Schlauchleitungssystem nach Anspruch 1, **dadurch gekennzeichnet, dass** aufgrund der großen direkten Kontaktfläche zwischen Armierungsschicht (8) und der die Armierungsschicht (8) umgebenden Schutzschicht (9) die Volumenausdehnung ε des Hohlraumes (6) der Bremsleitungen (5a, 5b) bei einem Innendruck von 69 bar und 20 °C weniger als 5 %, vorzugsweise weniger als 3 %, beträgt.

3.  Schlauchleitungssystem nach Anspruch 1 oder 2, **dadurch gekennzeichnet, dass** die Verdrillung z der Fadenstränge (10) der Armierungsschicht (8) pro Meter Fadenstrang (10) weniger als 100 Umdrehungen, vorzugsweise weniger als 50 Umdrehungen, insbesondere weniger als 20 Umdrehungen, besonders bevorzugt weniger als 10 Umdrehungen, ganz besonders bevorzugt weniger als 5 Umdrehungen beträgt.

4.  Schlauchleitungssystem nach einem der Ansprüche 1 bis 3, **dadurch gekennzeichnet, dass** der abgeflachte Querschnitt der geflochtenen Fadenstränge (10) mindestens zweimal, vorzugsweise mindestens dreimal so breit wie hoch ist und vorzugsweise zumindest im Wesentlichen die Form eines Parallelogramms besitzt.

**5.** Schlauchleitungssystem nach einem der Ansprüche 1 bis 4, **dadurch gekennzeichnet, dass** die Armierungsschicht (8) mindestens 16 miteinander verflochtene Fadenstränge (10) aufweist.

**6.** Schlauchleitungssystem nach einem der Ansprüche 1 bis 5, **dadurch gekennzeichnet, dass** der Innenschlauch (7) an die Kontur der geflochtenen Armierungsschicht (8) angepasste Abzeichnungen aufweist, die die Kontaktfläche zwischen Innenschlauch (7) und Armierungsschicht (8) vergrößern.

**7.** Schlauchleitungssystem nach einem der Ansprüche 1 bis 6, **dadurch gekennzeichnet, dass** die Fadenstränge (10) frei von Aramid sind und vorzugsweise aus einem Polymer, insbesondere Polyester und/oder Polyamid bestehen.

**8.** Schlauchleitungssystem nach einem der Ansprüche 1 bis 7, **dadurch gekennzeichnet, dass** in einem durch die Bremsleitungsachse (x) verlaufenden Bremsleitungslängsschnitt gesehen die einzelnen Fadenstränge (10) im geflochtenen Zustand eine Querschnittsfläche von 0,3 bis 0,7 mm$^2$, vorzugsweise 0,4 bis 0,6 mm$^2$ aufweisen.

**9.** Schlauchleitungssystem nach einem der Ansprüche 1 bis 8, **dadurch gekennzeichnet, dass** der Innendurchmesser ($d_0$) des Innenschlauchs (7) 1,5 bis 2,6 mm, vorzugsweise 1,8 bis 2,6 mm, beträgt.

**10.** Schlauchleitungssystem nach einem der Ansprüche 1 bis 9, **dadurch gekennzeichnet, dass** die Wandstärke ($s_i$) des Innenschlauches (7) 0,4 bis 0,7 mm beträgt.

**11.** Schlauchleitungssystem nach einem der Ansprüche 1 bis 11, **dadurch gekennzeichnet, dass** die Armierungsschicht (8) eine Schichtdicke ($s_a$) von 0,3 bis 0,5 mm, vorzugsweise 0,3 bis 0,4 mm, aufweist.

**12.** Schlauchleitungssystem nach einem der Ansprüche 1 bis 11, **dadurch gekennzeichnet, dass** die polymere Schutzschicht (9) die äußerste Schicht der Bremsleitungen (5a, 5b) bildet.

**13.** Schlauchleitungssystem nach einem der Ansprüche 1 bis 12, **dadurch gekennzeichnet, dass** die Bremsleitung (5b) für die Hinterradbremse (3b) mindestens 0,5 m, beispielsweise mindestens 0,8 m länger ist als die Bremsleitung (5a) für die Vorderradbremse (3a).

**14.** Hydraulische Zweirad-Bremsanlage (2) mit

- zwei hydraulisch betätigbaren Bremsen (3a, 3b) für Vorder- bzw. Hinterrad;
- zwei Bremshebeln (4a, 4b) zur Betätigung der Bremsen (3a, 3b) und
- einem Schlauchleitungssystem nach einem der Ansprüche 1 bis 13;
- wobei die beiden Bremsleitungen (5a, 5b) des Schlauchleitungssystems jeweils eine hydraulische Wirkverbindung zwischen einem Bremshebel (4a, 4b) und einer Bremse (3a, 3b) herstellen.

**15.** Hydraulische Zweirad-Bremsanlage (2) nach Anspruch 14, wobei die beiden Bremsleitungen (5a, 5b) mit einer Bremsflüssigkeit gefüllt sind.

**Claims**

**1.** A hose line system for a hydraulic bicycle braking system (2) having

- at least two flexible brake lines (5a, 5b), preferably of different lengths, for receiving brake fluid;
- wherein the brake lines (5a, 5b) each serve to produce a hydraulic operative connection between a brake lever (4a, 4b) and a front or rear wheel brake (3a, 3b) respectively of the bicycle braking system (2);
- wherein the brake lines (5a, 5b) each comprise a preferably polymeric inner tube (7) defining an internal cavity (6), a reinforcing layer (8) continuously surrounding the inner tube (7) and a preferably polymeric protective layer (9) surrounding the reinforcing layer (8) and
- wherein the continuous reinforcing layer (8) is constructed from braided yarn strands (10);

**characterised in that,** seen in a longitudinal section of the brake line running through the axis (x) of the brake line, the braided yarn strands (10) have a flattened cross-section such that, owing to the resulting large direct contact surface between reinforcing layer (8) and the protective layer (9) surrounding the reinforcing layer (8), the brake lines (5a, 5b) display such a low elastic deformation when the brakes (3a, 3b) are actuated by the brake levers (4a, 4b) that the volumetric expansion $\varepsilon$ of the cavity (6) of the brake lines (5a, 5b) is less than 8%, preferably less than 6%, at an internal pressure of 138 bar and at 20°C.

2. The hose line system according to claim 1, **characterised in that**, owing to the large direct contact surface between reinforcing layer (8) and the protective layer (9) surrounding the reinforcing layer (8), the volumetric expansion $\varepsilon$ of the cavity (6) of the brake lines (5a, 5b) is less than 5%, preferably less than 3%, at an internal pressure of 69 bar and at 20°C.

3. The hose line system according to claim 1 or 2, **characterised in that** the twist z of the yarn strands (10) of the reinforcing layer (8) per metre of yarn strand (10) is less than 100 turns, preferably less than 50 turns, in particular less than 20 turns, particularly preferably less than 10 turns, most particularly preferably less than 5 turns.

4. The hose line system according to one of claims 1 to 3, **characterised in that** the flattened cross-section of the braided yarn strands (10) is at least twice, preferably at least three times, as wide as it is high and preferably has, at least substantially, the shape of a parallelogram.

5. The hose line system according to one of claims 1 to 4, **characterised in that** the reinforcing layer (8) comprises at least 16 yarn strands (10) braided together.

6. The hose line system according to one of claims 1 to 5, **characterised in that** the inner tube (7) has markings matching the contour of the braided reinforcing layer (8) which increase the size of the contact surface between inner tube (7) and reinforcing layer (8).

7. The hose line system according to one of claims 1 to 6, **characterised in that** the yarn strands (10) are free from aramid and preferably consist of a polymer, in particular polyester and/or polyamide.

8. The hose line system according to one of claims 1 to 7, **characterised in that**, seen in a longitudinal section of the brake line running through the axis (x) of the brake line, the individual yarn strands (10) in the braided state have a cross-sectional area of 0.3 to 0.7 mm$^2$, preferably 0.4 to 0.6 mm$^2$.

9. The hose line system according to one of claims 1 to 8, **characterised in that** the internal diameter (do) of the inner tube (7) is 1.5 to 2.6 mm, preferably 1.8 to 2.6 mm.

10. The hose line system according to one of claims 1 to 9, **characterised in that** the wall thickness ($s_i$) of the inner tube (7) is 0.4 to 0.7 mm.

11. The hose line system according to one of claims 1 to 10, **characterised in that** the reinforcing layer (8) has a layer thickness ($s_a$) of 0.3 to 0.5 mm, preferably 0.3 to 0.4 mm.

12. The hose line system according to one of claims 1 to 11, **characterised in that** the polymeric protective layer (9) forms the outermost layer of the brake lines (5a, 5b).

13. The hose line system according to one of claims 1 to 12, **characterised in that** the brake line (5b) for the rear wheel brake (3b) is at least 0.5 m, e.g. at least 0.8 m, longer than the brake line (5a) for the front wheel brake (3a).

14. A hydraulic bicycle braking system (2) comprising

- two hydraulically actuated brakes (3a, 3b) for the front and back wheel respectively;
- two brake levers (4a, 4b) for actuating the brakes (3a, 3b) and
- a hose line system according to one of claims 1 to 13;
- wherein the two brake lines (5a, 5b) of the hose line system each produce a hydraulic operative connection between a brake lever (4a, 4b) and a brake (3a, 3b).

15. The hydraulic bicycle braking system (2) according to claim 14, wherein the two brake lines (5a, 5b) are filled with a brake fluid.

**Revendications**

1. Système de conduites en tuyaux flexibles pour une installation de freinage hydraulique (2) pour deux-roues, comprenant

   - au moins deux conduites de frein (5a, 5b) flexibles, de préférence de longueurs différentes, destinées à recevoir le liquide de freinage,
   - les conduites de frein (5a, 5b) servant respectivement à établir une liaison hydraulique active entre un levier de frein (4a, 4b) et un frein de roue avant et frein de roue arrière (3a, 3b) de l'installation de freinage (2) pour deux-roues ;
   - les conduites de frein (5a, 5b) présentant respectivement un tuyau intérieur (7), de préférence polymère, définissant un espace intérieur creux (6), une couche de renforcement (8) entourant le tuyau intérieur (7) de manière fermée et une couche de protection (9), de préférence polymère, entourant la couche de renforcement (8), et
   - la couche de renforcement (8) fermée étant constituée de cordons de fils (10) tressés ;

   **caractérisé en ce que** les cordons de fils (10) tressés, dans une vue en coupe longitudinale de la conduite de frein s'étendant à travers l'axe de conduite de frein (x), présentent une section transversale aplatie de manière à ce qu'en raison de la grande surface de contact direct qui en résulte entre la couche de renforcement (8) et la couche de protection (9) entourant la couche de renforcement (8), les conduites de frein (5a, 5b) montrent, lors d'un actionnement des freins (3a, 3b) par le levier de freinage (4a, 4b), une déformation élastique tellement moindre que l'étendue en volume ε de l'espace creux (6) des conduites de frein (5a, 5b) est de moins de 8%, de préférence de moins de 6% à une pression intérieure de 138 bars et à 20°C.

2. Système de conduites en tuyaux flexibles selon la revendication 1, **caractérisé en ce qu'**en raison de la grande surface de contact direct entre la couche de renforcement (8) et la couche de protection (9) entourant la couche de renforcement (8), l'étendue en volume ε de l'espace creux (6) des conduites de frein (5a, 5b) est de moins de 5%, de préférence de moins de 3% à une pression intérieure de 69 bars et à 20°C.

3. Système de conduites en tuyaux flexibles selon la revendication 1 ou 2, **caractérisé en ce que** la torsion z des cordons de fils (10) de la couche de renforcement (8) par mètre de cordon de fils (10) est de moins de 100 torsions, de préférence de moins de 50 torsions, notamment de moins de 20 torsions, de manière particulièrement préférée de moins de 10 torsions, de manière tout à fait particulièrement préférée de moins de 5 torsions.

4. Système de conduites en tuyaux flexibles selon l'une quelconque des revendications 1 à 3, **caractérisé en ce que** la section transversale aplatie des cordons de fils (10) tressés est au moins deux fois, de préférence au moins trois fois aussi large que haute et **en ce qu'**elle possède de préférence au moins essentiellement la forme d'un parallélogramme.

5. Système de conduites en tuyaux flexibles selon l'une quelconque des revendications 1 à 4, **caractérisé en ce que** la couche de renforcement (8) présente au moins 16 cordons de fils (10) tressés entre eux.

6. Système de conduites en tuyaux flexibles selon l'une quelconque des revendications 1 à 5, **caractérisé en ce que** le tuyau intérieur (7) présente des représentations adaptées au contour de la couche de renforcement (8) tressée, lesquelles agrandissent la surface de contact entre le tuyau intérieur (7) et la couche de renforcement (8).

7. Système de conduites en tuyaux flexibles selon l'une quelconque des revendications 1 à 6, **caractérisé en ce que** les cordons de fils (10) sont exempts d'aramide et sont de préférence constitués d'un polymère, notamment de polyester et/ou de polyamide.

8. Système de conduites en tuyaux flexibles selon l'une quelconque des revendications 1 à 7, **caractérisé en ce que** les cordons de fils (10) individuels, dans une vue en coupe longitudinale de la conduite de frein s'étendant à travers l'axe de conduite de frein (x), présentent à l'état tressé une surface de section transversale de 0,3 à 0,7 mm$^2$, de préférence de 0,4 à 0,6 mm$^2$.

9. Système de conduites en tuyaux flexibles selon l'une quelconque des revendications 1 à 8, **caractérisé en ce que** le diamètre intérieur (do) du tuyau intérieur (7) est de 1,5 à 2,6 mm, de préférence de 1,8 à 2,6 mm.

**10.** Système de conduites en tuyaux flexibles selon l'une quelconque des revendications 1 à 9, **caractérisé en ce que** l'épaisseur de paroi ($s_i$) du tuyau intérieur (7) est d 0,4 à 0,7 mm.

**11.** Système de conduites en tuyaux flexibles selon l'une quelconque des revendications 1 à 10, **caractérisé en ce que** la couche de renforcement (8) présente une épaisseur de couche ($s_a$) de 0,3 à 0,5 mm, de préférence de 0,3 à 0,4 mm.

**12.** Système de conduites en tuyaux flexibles selon l'une quelconque des revendications 1 à 11, **caractérisé en ce que** la couche de protection (9) polymère forme la couche extérieure des conduites de frein (5a, 5b).

**13.** Système de conduites en tuyaux flexibles selon l'une quelconque des revendications 1 à 12, **caractérisé en ce que** la conduite de frein (5b) pour le frein de roue arrière (3b) est plus longue d'au moins 0,5 m, par exemple, plus longue d'au moins 0,8 m que la conduite de frein (5a) pour le frein de roue avant (3a).

**14.** Installation de freinage hydraulique (2) pour deux-roues, comprenant

- deux freins (3a, 3b) actionnables hydrauliquement pour roue avant et roue arrière :
- deux leviers de frein (4a, 4b) pour actionner les freins (3a, 3b), et
- un système de conduites en tuyaux flexibles selon l'une quelconque des revendications 1 à 13 ;
- les deux conduites de frein (5a, 5b) du système de conduites en tuyaux flexibles établissant respectivement une liaison hydraulique active entre un levier de frein (4a, 4b) et un frein (3a, 3b).

**15.** Installation de freinage hydraulique (2) pour deux-roues selon la revendication 14, les deux conduites de frein (5a, 5b) étant remplies avec un liquide de freinage.

Fig. 1

Fig. 2

Fig. 2a

## Fig. 3

## Fig. 4

## Fig. 5

10

12

h

b

100 μm

## Fig. 6

13

10

100 μm

9

13

8

7

6

[496 μm]

[375 μm]

[626 μm]

100 μm

9

8

7

6

[486 μm]

[605 μm]

[446 μm]

[348 μm]

[515 μm]

100 μm

# Fig. 7

Fig. 9

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1024320 A